(19) Europäisches Patentamt

European Patent Office

Office européen des brevets

(11) **EP 4 644 476 A1**

(12) **EUROPEAN PATENT APPLICATION**

(43) Date of publication:
**05.11.2025 Bulletin 2025/45**

(21) Application number: **25171424.2**

(22) Date of filing: **17.04.2025**

(51) International Patent Classification (IPC):
**C08K 5/20** (2006.01)   **C08L 23/00** (2006.01)
**E04D 5/06** (2006.01)

(52) Cooperative Patent Classification (CPC):
(C-Sets available)
E04D 5/06                                    (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **29.04.2024 US 202463640129 P
04.04.2025 US 202519170882**

(71) Applicant: **Carlisle Construction Materials, LLC
Carlisle PA 17013 (US)**

(72) Inventors:
• **ZHANG, Xuan
  Carlisle, PA 17013 (US)**
• **YANG, Xiaozhou
  Kirkland, WA 98034 (US)**
• **LIANG, Ying
  Lake Jackson, TX 77566 (US)**

(74) Representative: **Mewburn Ellis LLP
Aurora Building
Counterslip
Bristol BS1 6BX (GB)**

(54) **ROOFING MEMBRANE WITH IMPROVED LONGER-TERM RADIATIVE PROPERTIES**

(57) A TPO roofing membrane including an extruded TPO material with a fatty acid amine such as erucamide added to reduce surface energy for increased stain resistance.

**Figure 1.** Contact angle results for Ref. vs. samples.

EP 4 644 476 A1

(52) Cooperative Patent Classification (CPC): (Cont.)

C-Sets
**C08K 5/20, C08L 23/00**

**Description**

**Related Application:**

The present application claims priority to U.S. Provisional Patent Application Serial No. 63/640,129, of same title, filed April 29, 2024, the entire disclosure of which is incorporated herein by reference in its entirety.

**Technical Field:**

The present invention relates to TPO (i.e.: thermoplastic polyolefin) roofing membranes.

**Background of the Invention:**

Thermoplastic roofing membranes used for low-sloped roofs are well known in the art. TPO membranes are usually fabric reinforced and consist of a top TPO layer, a middle scrim layer and a bottom TPO layer. The formulation for the top and bottom layer can be the same or they can be different. "Hifax™ CA10A" is the most common TPO polymer in roofing membranes and is available from LyondellBasell Industries of Houston, Texas. TPO polymer has a polypropylene (PP) matrix with ethylene propylene (EP) rubber as the well dispersed discrete phase. The polypropylene matrix phase is a copolymer of propylene and polyethylene with propylene being the dominant composition. The EP rubber phase is also a copolymer of propylene and polyethylene with significantly lower flexural modulus and higher polyethylene content than the polypropylene matrix phase. The TPO polymers are commonly referred to as heterophasic copolymer of polypropylene and polyethylene. "LLDPE" (a.k.a.: Linear Low Density Polyethylene) is a hard commodity polymer, frequently used in packaging and other general applications. It is sometimes used as a carrier for other components such as flame retardants and stabilizers in the TPO formulation. LLDPE can be used to partially replace the reactor blend copolymer. LLDPE is readily available from chemical companies such as LyondellBasell Industries, Formosa Plastics Corporation, The Dow Chemical Company, Exxon Mobil Corporation, among others. In a TPO roofing membrane, PP is the dominant matrix phase with LLDPE phase typically from 0% to 20%. Ethylene-based polymer is rarely used as the dominant matrix phase in the TPO roofing membrane. In U.S. Patent 7,741,397, entitled Filled polymer compositions made from interpolymers of ethylene/$\alpha$-olefins and uses thereof, and in U.S. Published Patent Application 2022/0143962, entitled Thermoplastic roofing membranes for fully-adhered roofing systems, ethylene-based block copolymers have been used as the base polymer.

The choice of roofing membrane plays an important role in the energy efficiency of the building. In particular, the color of the roofing membrane significantly effects energy efficiency. This is because a white roofing membrane reflects more sunlight and absorbs less heat as compared to a darker membrane. Since the lighter color reduces the heat absorbed by the roof, this also reduces the amount of heat transferred to the building, thereby reducing the need for air conditioning to cool the building. In urban areas, high concentrations of buildings and paved surfaces can lead to higher temperatures. White roofing membranes are therefore preferred as they can work to mitigate this effect by reflecting sunlight and reducing overall temperatures.

Unfortunately, over a period of time, dirt and stains will start to appear on the white roofing membrane due to the roofing membrane being exposed to environmental conditions. Dirt accumulation and stain formation can significantly reduce the longer-term solar reflectance and thermal emittance of the roofing membrane. Such dirt and stains decrease the radiative properties of the roofing membrane. These radiative properties can be measured by solar reflectance and thermal emittance. The Solar Reflectance Index (SRI) is calculated from solar reflectance and the thermal emittance and is often used as a single numerical value that reflects a material's ability to reflect and emit solar energy. A SRI indicates cooler surfaces and thus translates to a more energy efficient roof.

What is instead desired is a system for reducing dirt accumulation and stain formation in a white TPO roofing membrane. Simply put, keeping a white TPO roofing membrane white for a longer period of time, by decreasing the dirt accumulation and stain formation on the surface of the membrane, will significantly improve the energy efficiency of building.

To date, fluorochemicals and silicone have been added to lower the surface energy of the membrane and improve its stain resistance. Unfortunately, these chemicals tend to interfere with the thermal welding of the roofing membranes. As such, they are not an effective solution.

Systems of using erucamide and other fatty amides in TPO roofing membranes currently exist, but only in the context of decreasing surface friction to allow the membrane to slip over one another (for example when the membrane is folded over on top of itself and then moved around during installation). An example of such a system is found in Published U.S Patent Application 2022/0143962, entitled Thermoplastic Roofing Membranes for Fully Adhered Roofing Systems. Importantly, in this system, the erucamide is only added to the surface of the top ply of the TPO membrane to make the top surface of the membrane more slippery. In addition, the erucamide that it added is from 0.3% to 1.8% by weight of the total layer.

## Summary of the Invention:

The present invention provides a novel formulation for a TPO roofing membrane that reduces the surface energy of the membrane. This reduces dirt accumulation and soiling of the membrane. This improves the membrane's reflective properties and keeps the membrane a lighter, whiter color for a longer period of time.

In preferred aspects, the present system preferably adds various fatty amides to the membrane material during the membrane's extrusion process. Such fatty amides lower the surface energy of the TPO membrane and thus keep its surface cleaner for longer periods of time.

In various preferred aspects, the fatty acid amine is erucamide.

In various preferred aspects, the TPO roofing membrane includes more than 0.04% by weight of fatty acid amide in the total membrane formulation. In other preferred embodiments, the concentration by weight of fatty acid amide in the total formulation is between 0.04 and 0.4% fatty acid amide in the total membrane formulation. In more preferred aspects, the concentration by weight of fatty acid amide in the total formulation is between 0.04 and 0.3% fatty acid amide in the total membrane formulation.

## Brief Description of the Drawings:

Fig. 1 illustrates the "contact angle" which is a commonly used technique for evaluating surface energy.
Fig. 2 illustrates the color change, delta E, of the TPO samples after being exposed to the soiling mixture for 48 hours (according to modified ASTM D7897).

## Detailed Description of the Drawings:

Table 1 below sets forth five specific formulations prepared according to the present system and method. Erucamide is added as 10% concentrate in linear low-density polyethylene (LLDPE) carrier. The final concentration of erucamide being 0.04 to 0.2% of the final TPO membrane mass (as compared a reference sample having no erucamide therein).

As can be seen, in all of these samples, the combination of flame retardant, stabilizer and pigment remains at 29.7%. The addition of the erucamide is thereby reflected as a small drop in mass of TPO polymer in the sample.

**Table 1: TPO roof membrane sample formulation**

|  | Ref. 1 | Example 1 | Example 2 | Example 3 | Example 4 | Example 5 |
|---|---|---|---|---|---|---|
| Polymer (%) | 70.3 | 69.9 | 69.8 | 69.3 | 68.8 | 68.3 |
| Flame retardant + stabilizer + pigment (%) | 29.7 | 29.7 | 29.7 | 29.7 | 29.7 | 29.7 |
| Erucamide concentrate (%) | 0.0 | 0.4 | 0.6 | 1.0 | 1.5 | 2.0 |
| Total (%) | 100.0 | 100.0 | 100.2 | 100.0 | 100.0 | 100.0 |

In accordance with the present system, the erucamide is preferably added and mixed into the TPO material as the TPO is extruded. As such, the erucamide is added to the entire membrane, rather than just being added at the top as described in Published U.S Patent Application 2022/0143962.

For comparison purposes, the present system uses substantially less erucamide than does the low friction roofing membrane described above in Published U.S Patent Application 2022/0143962. Specifically, the present system uses an erucamide concentration of 0.04% to 0.2%, and the system of Published U.S Patent Application 2022/0143962 requires a much higher erucamide concentration of 0.3 to 1.8% by weight.

Although the present system uses the specific example of erucamide, it is to be understood that the present system equally covers other fatty acids, fatty acid esters or fatty acid amides. Examples of such include, but are not limited to, stearic acid, methyl oleate, butyl stearate, stearamide, loeamide, erucamide, behenamide, ethylene bis stearamide, glyceryl monostearate, palmitoleamide, vaccenamide and linoleamide.

Most preferably, the weight of the erucamide or fatty acid is at least 0.04% of the total weight of the membrane. In further preferred aspects, the weight of the erucamide or fatty acid is between 0.04 and 0.3% of the total weight of the membrane.

## Experimental Testing Results:

The present formulation was experimentally tested. This was done by preparing various soiling agents which were then mixed together in an aqueous solution and applied to the present TPO membrane. After this mixture of various soiling agents were applied to the membrane, the color, solar reflectance and thermal emittance of the membranes were measured. This testing followed a modified ASTM D7897-18 to simulate field exposure.

First, four different soiling agents were prepared, as follows:

- Soot: Mix 0.685 ± 0.05 g of aqua-black 001 (carbon black) with half liter of distilled water using an air mixer for 5 minutes to form a stable suspension.

- Dust: Mix 0.15 ± 0.02 g of iron oxide, 0.5 ± 0.05 g of Montmorillonite, 0.5 ± 0.05 g of Bentonite with half liter of distilled water using an air mixer for 5 minutes to form a stable suspension.

- Salt: Mix 0.15 ± 0.03 g sodium chloride, 0.15 ± 0.03 g sodium nitrate, 0.2 ± 0.03 g calcium sulfate with half liter of warm distilled water using an air mixer for 5 minutes to form a stable suspension.

- Particulate organic matter: Mix 0.7 ± 0.05 g of Humic acid with half liter of distilled water using an air mixer for 5 minutes to form a stable suspension.

Next, these four soiling agents were combined in equals parts to create the soiling mixture for average US conditions.

Next, the TPO membrane samples were cut into uniform sizes (1"x3"). A hole was punctured at the top of each sample specimen. The samples were hung from the hole to ensure full immersion into the aqueous soiling mixture. A beaker was filled with soil mixture made according to the above procedure. The TPO samples that were tested were soaked in the soiling mixture under stirring for 48 hours, or for 336 hours or for any desirable duration at room temperature. After soaking, the samples were taken out, rinsed with DI water and air-dried.

Next, the color, solar reflectance and thermal emittance of the samples was measured. Color was measured by a X-Rite Ci6X Spectrophotometer. Nine data points were collected for each specimen, and the average number was reported. The results were recorded in values of L*, a*, and b*. As known to people in the art, In color space, L*, a*, b* represent values in the CIELAB color space, which is a color model designed to approximate human vision. Each component signifies the following:

L (Lightness)**: This represents the lightness of the color. L values range from 0 to 100, where 0 represents black and 100 represents white. A value of 50 typically represents a neutral gray.

*a (Green-Red)**: This represents the position on the green-red axis. Positive values represent the red end of the spectrum, while negative values represent the green end. Zero indicates a neutral color, neither green nor red.

*b (Blue-Yellow)**: This represents the position on the blue-yellow axis. Positive values represent the yellow end of the spectrum, while negative values represent the blue end. Zero indicates a neutral color, neither blue nor yellow.

The color difference before and after soiling was calculated based on the formula below.

$$\Delta E = \sqrt{(L_2 - L_1)^2 + (a_2 - a_1)^2 + (b_2 - b_1)^2}$$

Solar reflectivity refers to the fraction of sunlight that is reflected by a surface, such as the Earth's surface or various objects. It's typically measured on a scale from 0 to 1, where 0 represents a completely absorbent surface and 1 represents a perfectly reflective surface. Different surfaces have different reflectivity values. For roof membrane, it is desirable to have solar reflectivity value as close as possible to 1.

Thermal emissivity is a measure of a material's ability to emit thermal radiation. Thermal emissivity is defined as the ratio of the radiation emitted by a surface to that emitted by a perfect black body at the same temperature and under the same conditions. Thermal emissivity is typically expressed as a dimensionless value between 0 and 1, where a value of 1 indicates a perfect emitter (a perfect black body), and lower values indicate less efficient emitters. Materials with high thermal emissivity radiate heat effectively, while materials with low thermal emissivity tend to retain heat. For roof membranes, it is desirable to have thermal emissivity close to 1.

Solar Reflectivity Index (SRI) is a measure used extensively in the construction industry to evaluate the ability of a surface material to reflect solar heat. SRI is calculated based on solar reflectance and thermal emissivity. The SRI scale typically ranges from 0 to 100 or higher, with higher values indicating cooler surfaces that reflect more solar heat. This index is particularly important in urban environments where heat islands can form due to the high concentration of buildings and pavement, leading to increased temperatures. Higher SRI values are preferred for roof membrane. For roofing membranes, it is desirable to achieve SRI as close as possible to 100.

solar reflectance was measured by 410 Solar-I and LIDAR reflectometer. Thermal emittance was measured by ET-100 Emissiometer. In these tests, the sample specimens were cut into 2 inch x 2 inch sizes and nine samples were tested for each specimen. SRI was calculated from solar reflectance and thermal emittance using the formula below:

$$SRI = 100 - (17.1 \times \rho) + (5.4 \times \epsilon)$$

where:

- $\rho$ (rho) is the solar reflectance
- $\epsilon$ (epsilon) is the thermal emittance

This testing yielded the following experimental results:

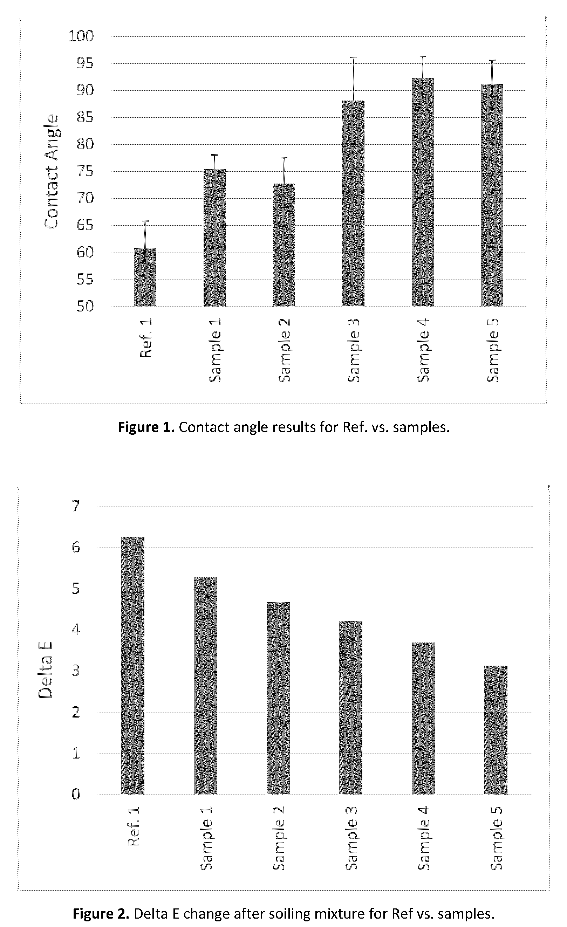

Fig. 1 shows the "contact angle" which is a commonly used technique for evaluating surface energy. A high "contact angle" corresponds to a low surface energy. As seen in Fig. 1, the contact angle of the TPO roofing membrane surface increases with increasing amounts of fatty acid amide (i.e. erucamide) being added. Specifically, the contact angle first quickly increases with the erucamide being added and then reaches a plateau. This shows that the surface energy of the TPO roofing membrane can be reduced through the addition of fatty acid, fatty acid ester or fatty acid amide such as erucamide.

Fig. 2 shows the color change, delta E, of the TPO samples after being exposed to the soiling mixture for 48 hours (according to modified ASTM D7897). As can be seen, the color change is significantly less in presence of fatty acid amide (erucamide) as compared to the reference sample. This demonstrates that the membrane remains cleaner under the soiling conditions in the present formulation and the dirt pickup and stain resistance is improved in the present TPO roofing membrane.

Furthermore, Table 2 below shows the L* and color change, delta E, of the TPO samples after being exposed to the soiling mixture for 336 hours. As can be seen from the results, color change, delta E, of the TPO reference sample continue to increase, while color change for samples containing erucamide levels off with increased exposure to the soiling solution. This suggests the samples containing erucamide remained cleaner under soiling conditions.

**Table 2: L\* and delta E for TPO samples before and after the soiling.**

| Table 2 | | | | | | |
|---|---|---|---|---|---|---|
| | Ref. 1 | Example 1 | Example 2 | Example 3 | Example 4 | Example 5 |
| Initial L* | 96.13 | 95.87 | 95.74 | 95.76 | 96.29 | 95.78 |
| L* after 2-day-soiling | 90.1 | 90.9 | 91.3 | 91.9 | 92.9 | 93.1 |
| Delta E after 2-day-soiling | 6.3 | 5.3 | 4.7 | 4.2 | 3.7 | 3.1 |
| L* after 2-week-soiling | 89.2 | 91.2 | 91.5 | 92.6 | 93.0 | 93.1 |
| Delta E after 2-week-soiling | 7.4 | 5.1 | 4.4 | 3.4 | 3.4 | 3.0 |

**Table 3: Radiative properties of the membrane before and after soiling.**

| Table 3 | | | | | | |
|---|---|---|---|---|---|---|
| | Ref. 1 | Example 1 | Example 2 | Example 3 | Example 4 | Example 5 |
| Initial solar reflectance | 0.769 | 0.761 | 0.761 | 0.769 | 0.770 | 0.772 |
| Initial thermal emittance | 0.880 | 0.880 | 0.882 | 0.884 | 0.880 | 0.887 |
| Initial SRI | 94 | 93 | 93 | 95 | 95 | 95 |
| Solar reflectance after 2-week-soiling | 0.683 | 0.684 | 0.708 | 0.714 | 0.729 | 0.747 |
| Thermal emittance after 2-week-soiling | 0.872 | 0.872 | 0.872 | 0.868 | 0.871 | 0.872 |
| SRI after 2-week-soiling | 82 | 82 | 86 | 86 | 89 | 91 |

As can be seen in Table 3 above, the solar reflectivity of the samples erucamide maintains a higher solar reflectivity after soiling. After two weeks of soiling, the solar reflectivity of the reference sample reduced from 0.769 to 0.683, while the solar reflectivity of the sample containing 0.2% of erucamide reduced from 0.772 to 0.747.

As such, the present invention provides a TPO roofing membrane having increased stain resistance with solar reflectivity reduction of 0.08 or less after two weeks of soiling, comprising: an extruded TPO material; and a fatty acid amine added into the extruded TPO material. Preferably, the fatty acid amine is erucamide, and the percentage of erucamide is between 0.04-0.4%, or more preferably between 0.04-0.3%.

Similarly, as also seen above, the SRI of the reference reduced from 94 to 82 after two weeks of soiling, while the SRI of the sample containing 0.2% of erucamide reduced from 95 to 91.

As such, the present invention also provides a TPO roofing membrane having increased stain resistance with solar reflectivity index reduction of 10 or less after two weeks of soiling, comprising: an extruded TPO material; and a fatty acid amine added into the extruded TPO material. Preferably, the fatty acid amine is erucamide, and the percentage of erucamide is between 0.04-0.4%, or more preferably between 0.04-0.3%.

**Claims**

1. A TPO roofing membrane having reduced surface energy for increased stain resistance, comprising:

   an extruded TPO material; and
   a fatty acid amine added into the extruded TPO material.

2. The membrane of claim 1, wherein the fatty acid amine is erucamide.

3. The membrane of claim 2, wherein the percentage of erucamide is between 0.04-0.4%.

4. The membrane of claim 2, wherein the percentage of erucamide is between 0.04-0.3%.

5. A TPO roofing membrane having increased stain resistance with solar reflectivity reduction of 0.08 or less after two weeks of soiling, comprising:

   an extruded TPO material; and
   a fatty acid amine added into the extruded TPO material.

6. The membrane of claim 5, wherein the fatty acid amine is erucamide.

7. The membrane of claim 6, wherein the percentage of erucamide is between 0.04-0.4%.

8. The membrane of claim 6, wherein the percentage of erucamide is between 0.04-0.3%.

9. A TPO roofing membrane having increased stain resistance with solar reflectivity index reduction of 10 or less after two weeks of soiling, comprising:

   an extruded TPO material; and
   a fatty acid amine added into the extruded TPO material.

10. The membrane of claim 9, wherein the fatty acid amine is erucamide.

11. The membrane of claim 10, wherein the percentage of erucamide is between 0.04-0.4%.

12. The membrane of claim 10, wherein the percentage of erucamide is between 0.04-0.3%.

**Figure 1.** Contact angle results for Ref. vs. samples.

**Figure 2.** Delta E change after soiling mixture for Ref vs. samples.

**Europäisches Patentamt**
**European Patent Office**
**Office européen des brevets**

# EUROPEAN SEARCH REPORT

**Application Number**

EP 25 17 1424

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/276571 A1 (SHARMA ASHUTOSH H [US] ET AL) 7 December 2006 (2006-12-07) * paragraphs [0038], [0081], [0086] - [0090]; claims * * paragraphs [0093], [0094], [0224]; example 4 * | 1,5,9 | INV. C08K5/20 C08L23/00 E04D5/06 |
| A | CN 114 213 762 B (JINSHUI SCIENCE AND TECH STOCK LIMITED COMPANY) 26 September 2023 (2023-09-26) * claims; examples * | 1-12 | |
| X,D | US 2022/143962 A1 (WANG HAO [US] ET AL) 12 May 2022 (2022-05-12) * paragraphs [0017] - [0019], [0020], [0021], [0036], [0038]; claims; figures * | 1-12 | |
| A | US 2023/323175 A1 (RUFUS ISAAC BERNARD [US] ET AL) 12 October 2023 (2023-10-12) * paragraphs [0082], [0084]; claims * | 1-12 | |
| A | CN 106 750 918 B (GUANGDONG MIDEA ENVIRONMENT APPLIANCES MFG CO LTD) 26 February 2021 (2021-02-26) * claim 7 * | 1-12 | TECHNICAL FIELDS SEARCHED (IPC) C08K C08L E04D |
| A | US 2017/166736 A1 (KALFUS JAN [US] ET AL) 15 June 2017 (2017-06-15) * paragraphs [0003], [0004], [0014], [0065], [0066] * | 1-12 | |

The present search report has been drawn up for all claims

| Place of search | Date of completion of the search | Examiner |
|---|---|---|
| Munich | 1 September 2025 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 644 476 A1**

## ANNEX TO THE EUROPEAN SEARCH REPORT
## ON EUROPEAN PATENT APPLICATION NO.

EP 25 17 1424

01-09-2025

| Patent document cited in search report | | | Publication date | Patent family member(s) | | | Publication date |
|---|---|---|---|---|---|---|---|
| US 2006276571 | A1 | | 07-12-2006 | BR | PI0612023 | A2 | 13-10-2010 |
| | | | | CA | 2610329 | A1 | 14-12-2006 |
| | | | | DK | 1888686 | T3 | 29-04-2013 |
| | | | | EP | 1888686 | A1 | 20-02-2008 |
| | | | | ES | 2400726 | T3 | 11-04-2013 |
| | | | | JP | 5259393 | B2 | 07-08-2013 |
| | | | | JP | 2008542512 | A | 27-11-2008 |
| | | | | KR | 20080021601 | A | 07-03-2008 |
| | | | | PL | 1888686 | T3 | 28-06-2013 |
| | | | | TW | 200708558 | A | 01-03-2007 |
| | | | | US | 2006276571 | A1 | 07-12-2006 |
| | | | | WO | 2006131455 | A1 | 14-12-2006 |
| CN 114213762 | B | | 26-09-2023 | NONE | | | |
| US 2022143962 | A1 | | 12-05-2022 | CA | 3129685 | A1 | 13-08-2020 |
| | | | | EP | 3921150 | A1 | 15-12-2021 |
| | | | | US | 2022143962 | A1 | 12-05-2022 |
| | | | | US | 2024300230 | A1 | 12-09-2024 |
| | | | | WO | 2020163844 | A1 | 13-08-2020 |
| US 2023323175 | A1 | | 12-10-2023 | US | 2023323175 | A1 | 12-10-2023 |
| | | | | US | 2024336819 | A1 | 10-10-2024 |
| | | | | WO | 2023197008 | A1 | 12-10-2023 |
| CN 106750918 | B | | 26-02-2021 | NONE | | | |
| US 2017166736 | A1 | | 15-06-2017 | NONE | | | |

EPO FORM P0459

**EP 4 644 476 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63640129
- US 7741397 B
- US 20220143962 A